# EUROPEAN PATENT SPECIFICATION

(11) **EP 3 218 223 B1**
(45) Date of publication and mention of the grant of the patent: **26.09.2018**
(21) Application number: 15830907.0
(22) Date of filing: 07.10.2015
(51) Int. Cl.: B60N 2/829, B60N 2/818, B60N 2/897

(54) **A SELF ACTUATED HEADREST MECHANISM**
SELBSTBETÄTIGTER KOPFSTÜTZENMECHANISMUS
MÉCANISME D'APPUI-TÊTE À ACTIONNEMENT AUTOMATIQUE

(30) Priority: 10.11.2014 TR 201413216
(43) Date of publication of application: 20.09.2017
(73) Proprietor: Tofas Turk Otomobil Fabrikasi Anonim Sirketi, Bursa (TR)
(72) Inventor: YILMAZ, Ugur, Bursa (TR); AKCAY, Serhat, Bursa (TR); CAMASIRCIOGLU, Eren, Bursa (TR); DONMEZ, Kemal, Bursa (TR)
(74) Representative: Dericioglu Kurt, Ekin
(86) International application number: PCT/TR2015/050128
(87) International publication number: WO 2016/076808

(56) References cited:
- EP-A1- 1 810 877
- DE-A1- 10 257 227
- DE-A1- 10 257 228
- US-A- 5 895 094
- US-A1- 2002 053 826

## Description

### Field of the Invention

The present invention relates to a self-actuated headrest mechanism which enables to adjust height of headrests used in vehicles.

### Background of the Invention

In the state of the art, there are applications which allow performing adjustments according to the sizes of the driver or the passengers using the seat in driver and passenger seats in the vehicles. One of these applications is to adjust height in headrests. The driver/passenger performs height adjustment of the headrest by pushing the button under the headrest. Therefore the spring holding the headrest shaft is pushed and it can move up and down. Since the plastic tube guiding the movement of the headrest shaft is narrow, the user has to apply much force. When it is wanted to perform headrest easily with friction by designing the plastic tube wide, the headrest shaft cannot be fixed and hits to the plastic tube due to the vibrations occurring while the vehicle is moving.

United States Patent Document no US2009058149, an application known in the state of the art, discloses a mechanism designed so that the headrest moves by its own during the folding of the seat.

French Patent Document no FR2810931, an application known in the state of the art, discloses the headrest positioning according to the feedback received by the drive unit from the sensor.

United States Patent Document no US19900628039, an application known in the state of the art, discloses a mechanism which enables the headrests to be self-adjustable in vehicle seats.

Japanese Patent Document no JP2005067329, an application known in the state of the art, discloses automatic elevating/lowering of the headrest in the vehicle without using power unit. There is a stay, a stay holder behind the seat, and a frame in the headrest. In the mechanism there are fixed and movable pins. The mechanism is mounted on the frame. The connection point of the seat cushion transfers the movement performed by the rear end of the seat cushion in vertical direction to the pin corresponding to the pull spring.

Chinese Utility Model no CN201268246Y, an application known in the state of the art, discloses an automatic headrest. There is a main body and front plate on the headrest. There are rods and brackets on the main body. The rods have stopping slots. There are open holes on both sides of the bracket. The rods enter into the open holes. There is plastic support piece, steel wire and pull spring in the bracket. One end of the pull spring is connected to one end of the steel wire and its other and is fixed to the bracket.

Korean Patent Document no KR20100125619, an application known in the state of the art, discloses a device which controls the height of the headrest. In the device, there is a guide body, spiral spring, guide way and holding member. The guide body is behind the seat and it has a support hole. The rod enters into the guide body. The spiral spring compresses the rod or releases it.

German Patent Document no DE10257227 is an application also known in the state of the art.

### Summary of the Invention

The objective of the present invention is to provide a self-actuated headrest mechanism which enables the headrest shaft to be tightly held when the headrest is in fixed position, and enables the user not to have difficulty due to the friction force by releasing the shaft when the headrest height adjustment is wanted to be performed.

Another objective of the present invention is to provide a self-actuated headrest mechanism which enables the headrest to rise on its own automatically when a user pushes a button.

A further objective of the present invention is to provide a self-actuated headrest mechanism which operates completely mechanism and does not comprise any electronic structure.

### Detailed Description of the Invention

"A self-actuated headrest mechanism" developed to fulfill the objective of the present invention is illustrated in the accompanying figures wherein,

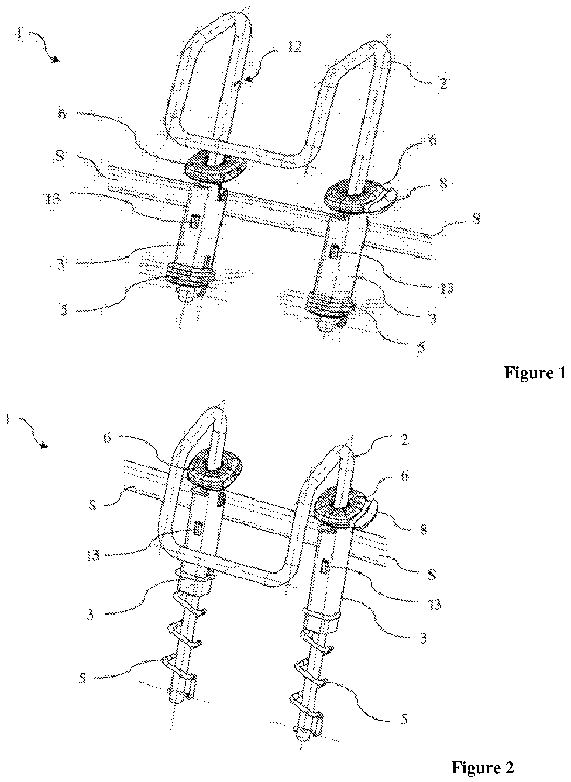

Figure 1 is the open-state view of the invention self-actuated headrest mechanism in uppermost position.
Figure 2 is the closed state view of the inventive self-actuated headrest mechanism.

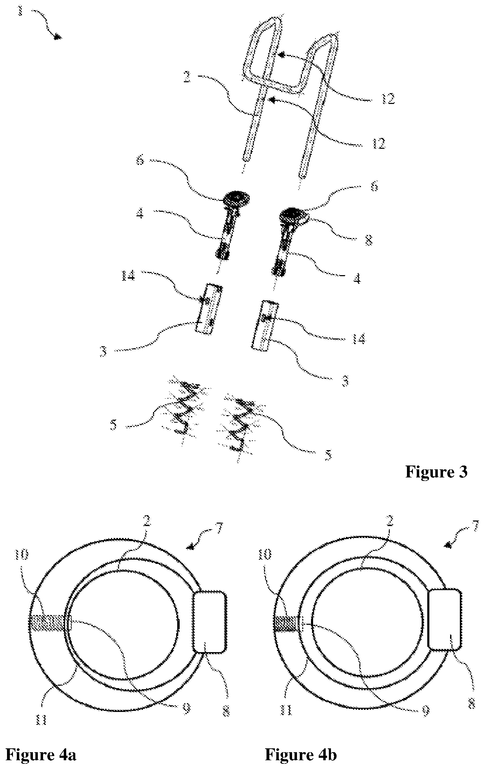

Figure 3 is the exploded view of the inventive self-actuated headrest mechanism.
Figure 4 is the schematic view of locked (4a) and unlocked (4b) state of the locking system.

The components given in the figures are assigned reference numbers as follows:
1. Self-actuated headrest mechanism
2. Headrest shaft
3. Metal tube
4. Plastic tube
5. Pulling spring
6. Grasping cap
7. Locking system
8. Button
9. Protrusion
10. Resilient element
11. Transmitter
12. Dent
13. Tab
14. Hole

### S. Seat frame

The inventive self-actuated headrest mechanism (1), which enables the user to easily adjust the headrest on which they lean their head according to the sizes of the user in passenger/driver seats of vehicles, comprises
- at least one headrest shaft (2) which forms the frame structure of the headrest, which is bent in reverse U form and the arms of which facing downwards extend vertical to the seat frame (S), and the arm of which closer to the seat frame (S) is longer,
- at least one metal tube (3) two corresponding surfaces of which are open, which is in hollow box form, through the open surfaces of which the headrest shaft (2) passes, and which is fixed to the seat frame (S) through its surface closer to the seat frame (S), at least one plastic tube (4) which is in form of a hollow cylinder and through which the headrest shaft (2) passes, and thus which serves as buffer between the metal tube (3) and the headrest shaft (2) by being placed inside the metal tube (3), and which is fixed to the metal tube (3),
- at least one pulling spring (5) which is attached to the headrest shaft (2) arm entering through the metal tube (3) and going out of the other open surface of the metal tube (3) from its one end, and which is attached to the outer surface of the metal tube (3) from its other end, and wherein the metal tube (3) can enter into the opening on its center,
- at least one grasping cap (6) which is fixed on the plastic tube (4) and which contacts the edges of the open surface of the metal tube (3) when the plastic tube (4) is mounted to the metal tube (3), and which surrounds the headrest shaft (2) extending inwards the plastic tube (4) in form of a hollow ring,
- at least one locking system which has at least one button (8) that is positioned inside the grasping cap (6) and extends outwards from the opening located on the grasping cap (6) and on which the user can apply pressure; at least one protrusion (9) that extends towards the headrest shaft (2) from inside another opening located on the surface of the grasping cap (6) facing the headrest shaft (2); at least one resilient element (10) that is positioned between the inner surface of the grasping cap (6) and the protrusion (9) such that it will be fixed to the protrusion (9) from its one end and that pushes the protrusion towards the headrest shaft (2) unless the user applies pressure; and at least one transmitter (11) that transmits the pressure applied on the button (8) to the resilient element (10) and on which the protrusion (9) is located,
- at least one dent (12) which is positioned in alignment with the protrusion (9) on the headrest shaft (2) and wherein the protrusion (9) enters upon the resilient element (10) pushes the protrusion (9), and thus which allows the headrest to be kept in this position.

In the preferred embodiment of the invention, on the headrest shaft (2), there are a great number of dents (12) in various alignments into which the protrusion (9) can enter so that the headrest can be positioned in different alignments.

In the preferred embodiment of the invention, the plastic tube (4) is fixed to the metal tube (3) by means of at least one tab (13) on its outer surface passing through and holding onto at least one hole (14) present on the metal tube (3).

In the preferred embodiment of the invention, the protrusion has a triangle cross section so that it prevents the headrest shaft (2) from going upwards against the user's will and it does not prevent the user by being stuck in the dents (12) on the headrest shaft (2) while the headrest is being pushed down by the user.

The inventive self-actuated headrest mechanism (1) is used for adjusting the height of the headrests of the seats used in vehicles. The mechanism (1) enables the headrest shaft (2) to be held tightly while the headrest is in fixed position, the headrest shaft (2) is released upon the user pushing the button (8) when the headrest height is to be adjusted and it can be moved upwards and downwards. The user does not need to apply much force by means of this movement which is performed and the said locking system (7) which is used. Furthermore, by means of the plastic tube (4) used as buffer zone, the headrest shaft (2) will not hit to the metal tube (3) and noise will not be generated with the effect of vibrations occurring during the movement of the vehicle. The plastic tube (4) prevents the headrest shaft (2) from being shocked and noise generation during the movement of the vehicle with minimum tolerance.

The headrest shaft (2) which is formed suitable for the headrest foam and forms the headrest frame structure by being positioned in this foam can be moved up and down by guiding of the plastic tubes (4). Upon the user pushes the button (8) on the grasping gap (6), the transmitter (11) transmits the pressure applied by the user to the resilient element (10) and thus enables the resilient element (10) to be compressed. In the meantime, it is enabled the protrusion (9) goes out of the dent (12) in which it enters due to the effect of the applied pressure, and thus the lock is enabled to be opened. Upon the lock is opened, the headrest shaft (2) becomes movable inside the plastic tube (4). The pulling spring (5) which is stretched upon the lock being opened while the headrest is in fixed position connected to the seat pulls the end of the movable headrest shaft (2) passing through the metal tube (3) towards the metal tube (3) (upwards) and thus enables the headrest to move upwards as being self-actuated. Similarly, upon the headrest being pushed down by the user, the pulling spring (5) which is attached to the end of the headrest shaft (5) is moved far from the metal tube (3) to which its other end is attached, and thus it is stretched and the pulling spring (5) is set. Therefore, the headrest shaft (2) can be aligned in a desired distance according to the sizes of the passenger.

The metal tube (3) is welded and fixed to the seat frame (S) and thus it carries the whole headrest structure. The pulling springs (5) which are not used in the conventional applications are an important element of the inventive mechanism (1) in terms of enabling the self-actuating movement which is desired. One end of the pulling spring (5) is fixed on the metal tube (3) without changing the conventional design while its other end is attached to the movable headrest shaft (2). Since additional parts are included without changing the current design, the current tolerances in the design are used and it is even possible to mount such that noise problem will be avoided by decreasing the tolerance values.

The pulling springs (5) are stretched and store energy by pushing the headrest downwards. With the changes which can be done in physical characteristics of the pulling spring (5) such as its winding number, the pushing force which will be applied by the user while closing the headrest can be reduced to a level which will not bother/push the user. The pulling springs waiting in set state pull the headrest shaft (2) released upon the user pushing the button (8) upwards. The protrusion (9) entering into the closest dent (12) upon the user pulling their hand from the button (8) when it comes to the desired position enables the headrest to be locked in this position. The headrest being raised in a self-actuated way without requiring the user applying pressure allows the user making adjustment easily.

## Claims

1. A self-actuated headrest mechanism (1), which enables the user to easily adjust the headrest on which they lean their head according to the sizes of the user in passenger/driver seats of vehicles, comprising
- at least one headrest shaft (2) which forms the frame structure of the headrest, which is bent in reverse U form and the arms of which facing downwards extend vertical to the seat frame (S), and the arm of which closer to the seat frame (S) is longer,
- at least one metal tube (3) two corresponding surfaces of which are open, which is in hollow box form, through the open surfaces of which the headrest shaft (2) passes, and which is fixed to the seat frame (S) through its surface closer to the seat frame (S),
- at least one plastic tube (4) which is in form of a hollow cylinder and through which the headrest shaft (2) passes, and thus which serves as buffer between the metal tube (3) and the headrest shaft (2) by being placed inside the metal tube (3), and which is fixed to the metal tube (3),
- at least one grasping cap (6) which is fixed on the plastic tube (4) and which contacts the edges of the open surface of the metal tube (3) when the plastic tube (4) is mounted to the metal tube (3), and which surrounds the headrest shaft (2) extending inwards the plastic tube (4) in form of a hollow ring, and **characterized by**
- at least one pulling spring (5) which is attached to the headrest shaft (2) arm entering through the metal tube (3) and going out of the other open surface of the metal tube (3) from its one end, and which is attached to the outer surface of the metal tube (3) from its other end, and wherein the metal tube (3) can enter into the opening on its center,
- at least one locking system which has at least one button (8) that is positioned inside the grasping cap (6) and extends outwards from the opening located on the grasping cap (6) and on which the user can apply pressure; at least one protrusion (9) that extends towards the headrest shaft (2) from inside another opening located on the surface of the grasping cap (6) facing the headrest shaft (2); at least one resilient element (10) that is positioned between the inner surface of the grasping cap (6) and the protrusion (9) such that it will be fixed to the protrusion (9) from its one end and that pushes the protrusion towards the headrest shaft (2) unless the user applies pressure; and at least one transmitter (11) that transmits the pressure applied on the button (8) to the resilient element (10) and on which the protrusion (9) is located,
- at least one dent (12) which is positioned in alignment with the protrusion (9) on the headrest shaft (2) and wherein the protrusion (9) enters upon the resilient element (10) pushes the protrusion (9), and thus which allows the headrest to be kept in this position.

2. A self-actuated headrest mechanism (1) according to claim 1, **characterized by** headrest shaft (2) which has a great number of dents (12) in different alignments thereon into which the protrusion (9) can enter so that the headrest can be positioned in different alignments.

3. A self-actuated headrest mechanism (1) according to claim 1 or 2, **characterized by** plastic tube (4) which is fixed to the metal tube (3) by means of at least one tab (13) on its outer surface fitting into and holding onto at least one hole (14) provided on the metal tube (3).

4. A self-actuated headrest mechanism (1) according to any one of the preceding claims, **characterized by** protrusion (9) which has a triangle cross section so that it does not prevent the user by preventing the headrest shaft (2) from going upwards without user preference and not being stuck into the dents (12) on the headrest shaft (2) while the headrest is being pushed down by the user.

## Patentansprüche

1. Selbsttätige Kopfstützen-Mechanismus (1), wodurch der Benutzer die Kopfstütze, auf der er seinen Kopf lehnen kann, entsprechend den Größen des Benutzers in den Passagier- / Fahrersitzen der Fahrzeuge leicht einstellen kann, **umfassend**
- mindestens eine Kopfstützenwelle (2), die eine Rahmenstruktur der Kopfstütze, die umgekehrt U-förmig gebogen ist und deren nach unten weisende Arme sich senkrecht zum Sitzrahmen (S) erstrecken und deren Arm näher am Sitzrahmen (S) länger ist,
- mindestens ein Metallrohr (3), dessen zwei korrespondierende Flächen offen sind, das in Form eines hohlen Kastens ist, durch dessen offene Flächen der Kopfstützenwelle (2) verläuft und der mit seiner dem Sitzrahmen (S) näher liegenden Fläche am Sitzrahmen (S) befestigt ist,
- mindestens ein Kunststoffrohr (4), der in Form eines hohlen Zylinders ist und durch das der Kopfstützenwelle (2) verläuft und somit durch Auflegen innerhalb des Metallrohrs (3) zwischen dem Metallrohr (3) und der Kopfstützenwelle (2) als Puffer dient, und das an dem Metallrohr (3) befestigt ist,
- mindestens eine Griffkappe (6), die an dem Kunststoffrohr (4) befestigt ist und die Kanten der offenen Oberfläche des Metallrohrs (3) berührt, wenn das Kunststoffrohr (4) an dem Metallrohr (3) angebracht ist, und die die Kopfstützenwelle (2) umgibt, die sich in Richtung des Kunststoffrohrs (4) in Form eines hohlen Ringes erstreckt, **gekennzeichnet durch**
- mindestens eine Zugfeder (5), die an dem Arm der Kopfstützenwelle (2) befestigt ist, der durch das Metallrohr (3) eintritt und von der anderen offenen Fläche des Metallrohrs (3) von einem Ende ausgeht, und die an der Außenfläche des Metallrohrs (3) von seinem anderen Ende befestigt ist und wobei das Metallrohr (3) in seiner Mitte in die Öffnung eintreten kann,
- mindestens ein Verriegelungssystem, das mindestens einen Knopf (8) aufweist, der innerhalb der Griffkappe (6) angeordnet ist und sich von der Öffnung auf der Griffkappe (6) nach außen erstreckt, und auf dem der Benutzer Druck ausüben kann; mindestens einen Vorsprung (9), der sich von einer anderen Öffnung, die sich auf der Oberfläche der Griffkappe (6) zugewandt zur Kopfstützenwelle (2) befindet, in Richtung der Kopfstützenwelle (2) erstreckt; mindestens ein elastisches Element (10), das zwischen der Innenfläche der Griffkappe (6) und dem Vorsprung (9) positioniert ist, sodass es von einem Ende an dem Vorsprung (9) befestigt wird und den Vorsprung in Richtung der Kopfstützenwelle (2) drückt, wenn der Benutzer keinen Druck ausübt; und mindestens einen Sender (11), der den auf den Knopf (8) ausgeübten Druck auf das elastische Element (10) überträgt und auf dem sich der Vorsprung (9) befindet,
- mindestens eine Ausbuchtung (12), die in Ausrichtung mit dem Vorsprung (9) auf dem Kopfstützenwelle (2) positioniert ist und wobei der Vorsprung (9) auf das elastische Element (10) eindringt und den Vorsprung (9) drückt, und somit ermöglicht, dass die Kopfstütze in dieser Position gehalten wird.

2. Selbsttätige Kopfstützen-Mechanismus (1) nach Anspruch 1 **gekennzeichnet durch** eine Kopfstützenwelle (2), die eine große Anzahl von Ausbuchtungen (12) in verschiedenen Ausrichtungen aufweist, in die der Vorsprung (9) eintreten kann, sodass die Kopfstütze in verschiedenen Ausrichtungen positioniert werden kann.

3. Selbsttätige Kopfstützen-Mechanismus (1) nach Anspruch 1 oder 2 **gekennzeichnet durch** ein Kunststoffrohr (4), das an dem Metallrohr (3) mittels mindestens einer Lasche (13) an seiner Außenfläche befestigt ist, die in mindestens ein am Metallrohr (3) vorgesehenes Loch (14) passt und dieses hält.

4. Selbsttätige Kopfstützen-Mechanismus (1) nach einem der vorangehenden Ansprüche **gekennzeichnet durch** einen Vorsprung (9) der einen dreieckigen Querschnitt aufweist, sodass der Benutzer nicht gehindert ist, indem es verhindert ist, dass die Kopfstützenwelle (2) ohne Benutzerpräferenz nach oben geht und nicht in die Ausbuchtungen (12) am Kopfstützenwelle (2) eingeklemmt ist, während die Kopfstütze vom Benutzer heruntergedrückt wird.

## Revendications

1. Un mécanisme d'appui-tête à commande automatique (1), qui permet à l'utilisateur d'ajuster facilement l'appui-tête sur lequel il appuie sa tête en fonction des dimensions de l'utilisateur dans les sièges de passager/conducteur de véhicules, **comprenant**
- au moins une tige d'appuie-tête (2) qui forme la structure de châssis de l'appui-tête, qui est recourbée en forme de U renversé et dont les branches dirigées vers le bas s'étendent verticalement au cadre de siège (S) et dont le bras est plus proche du siège le cadre (S) est plus long,
- au moins un tube métallique (3) dont deux surfaces correspondantes sont ouvertes, qui est sous forme de boîte creuse, à travers les surfaces ouvertes sur lesquelles passe la tige de l'appui-tête (2), et qui est fixée au châssis de siège (S) surface plus proche du cadre de siège (S),
- au moins un tube en plastique (4) en forme de cylindre creux et traversé par la tige d'appui-tête (2), qui sert de tampon entre le tube métallique (3) et la tige d'appui-tête (2) en étant placé à l'intérieur du tube métallique (3), et qui est fixé au tube métallique (3),
- au moins un capuchon de préhension (6) qui est fixé sur le tube en plastique (4) et qui vient en contact avec les bords de la surface ouverte du tube métallique (3) lorsque le tube en plastique (4) est monté sur le tube métallique (3) et qui entoure la tige d'appui-tête (2) prolongeant vers l'intérieur le tube en plastique (4) sous la forme d'une bague creuse, et **caractérisé par**
- au moins un ressort de traction (5) qui est attaché au bras de la tige de l'appui-tête (2) passant à travers le tube métallique (3) et sortant de l'autre surface ouverte du tube métallique (3) par sa première extrémité, et qui est fixé à la surface externe du tube métallique (3) à partir de son autre extrémité, et dans lequel le tube métallique (3) peut entrer dans l'ouverture sur son centre,
- au moins un système de verrouillage comportant au moins un bouton (8) positionné à l'intérieur du capuchon de préhension (6) et s'étendant vers l'extérieur de l'ouverture située sur le capuchon de préhension (6) et sur lequel l'utilisateur peut exercer une pression; au moins une saillie (9) qui s'étend vers la tige d'appui-tête (2) depuis l'intérieur d'une autre ouverture située sur la surface du capuchon de préhension (6) faisant face à la tige d'appui-tête (2); au moins un élément élastique (10) qui est positionné entre la surface interne du capuchon de préhension (6) et la saillie (9) de telle sorte qu'il sera fixé à la saillie (9) à partir de sa première extrémité et pousse la saillie vers la tige de l'appui-tête (2) à moins que l'utilisateur n'applique une pression; et au moins un émetteur (11) qui transmet la pression appliquée sur le bouton (8) à l'élément élastique (10) et sur laquelle est située la saillie (9),
- au moins une bosse (12) qui est positionné dans l'alignement de la saillie (9) sur la tige de l'appui-tête (2) et dans lequel la saillie (9) pénètre dans l'élément élastique (10) pousse la saillie (9), et ainsi ce qui permet de maintenir l'appui-tête dans cette position.

2. Mécanisme d'appui-tête à commande automatique (1) selon la revendication 1, **caractérisé par** une tige d'appui-tête (2) qui comporte un grand nombre de bosses (12) dans différents alignements sur lesquels la saillie (9) peut entrer, de sorte que l'appuie-tête peut être positionné dans différents alignements.

3. Mécanisme d'appui-tête à commande automatique (1) selon la revendication 1 ou 2, **caractérisé par** un tube en plastique (4) qui est fixé au tube métallique (3) au moyen d'au moins une patte (13) sur sa surface externe s'emboîtant dans au moins un trou (14) prévu sur le tube métallique (3) et s'y accrochant.

4. Mécanisme d'appui-tête à commande automatique (1) selon l'une quelconque des revendications précédentes, **caractérisé par** une saillie (9) qui présente une section transversale triangulaire empêchant l'utilisateur de monter sans solliciter la tige de l'appui-tête (2) et de ne pas s'enfoncer dans les bosses (12) de la tige de l'appui-tête (2) l'appui-tête est poussé vers le bas par l'utilisateur.
